# EUROPÄISCHE PATENTSCHRIFT

(11) **EP 3 966 542 B1**
(45) Veröffentlichungstag und Bekanntmachung des Hinweises auf die Patenterteilung: **25.10.2023**
(21) Anmeldenummer: 20727927.4
(22) Anmeldetag: 08.05.2020
(51) Int. Cl.: G01M 1/22, B60C 23/06, G01M 17/02

(54) **VERFAHREN UND PRÜFSTAND ZUR VORHERSAGE VON DRUCKSCHWINGUNGEN IN EINEM FAHRZEUGREIFEN**
METHOD AND TEST BENCH FOR PREDICTING PRESSURE OSCILLATIONS IN A VEHICLE TIRE
PROCÉDÉ ET BANC D'ESSAI DE PRÉDICTION DES OSCILLATIONS DE PRESSION DANS UN PNEU DE VÉHICULE

(30) Priorität: 08.05.2019 DE 102019206603
(43) Veröffentlichungstag der Anmeldung: 16.03.2022
(73) Patentinhaber: ZF Friedrichshafen AG, 88046 Friedrichshafen (DE)
(72) Erfinder: EISENBEISS, Jens, 94081 Fuerstenzell (DE); BÖSL, Roland, 94127 Neuburg am Inn (DE)
(86) Internationale Anmeldenummer: PCT/EP2020/062853
(87) Internationale Veröffentlichungsnummer: WO 2020/225416

(56) Entgegenhaltungen:
- WO-A1-2014/092722
- DE-A1-102017 109 650
- US-A- 5 606 122

## Beschreibung

Die vorliegende Erfindung betrifft ein Verfahren zur Vorhersage von Druckschwingungen in einem Fahrzeugreifen gemäß dem Oberbegriff von Anspruch 1 und einen Prüfstand zur Vorhersage von Druckschwingungen in einem Fahrzeugreifen gemäß dem Oberbegriff von Anspruch 12.

Im Stand der Technik sind sog. "High Speed Uniformity"- Messungen an Fahrzeugreifen bekannt, mittels derer die Gleichlaufeigenschaften der Fahrzeugreifen bei hohen Geschwindigkeiten bzw. hohen Reifendrehzahlen ermittelt werden. Die Gleichlaufeigenschaften umfassen dabei vor allem das Auftreten von Kräften aus Schwingungsresonanzen bei bestimmten Drehzahlen, wobei die Schwingungsresonanzen in der Regel unerwünscht sind. Die Anregung der Schwingungsresonanzen ist dabei auf unterschiedliche Ursachen wie etwa Steifigkeitsschwankungen, Geometriefehler, Dickenschwankungen oder Unwuchten der Fahrzeugreifen zurückzuführen. Die getesteten Fahrzeugreifen müssen hinsichtlich der Frequenzen der auftretenden Resonanzen bzw. hinsichtlich der Amplituden der beobachtetet Resonanzen innerhalb vorgegebener Grenzwerte liegen, um für den jeweils vorgesehenen Verwendungszweck, z.B. an einem Sportwagen oder an einem LKW, geeignet zu sein.

In diesem Zusammenhang beschreibt die DE 102 60 000 B4 ein Radkraftdynamometer zum Messen von Reifenkräften, wobei ein Fahrzeugrad an einer Radachse befestigt ist, welche über Wälzlager in einer Hohlwelle gelagert ist. Die Hohlwelle ist hydrostatisch in einem gestellfesten Gehäuse gelagert und weist einen Bund auf, in welchem Kraftsensoren zur Messung von Kräften angeordnet sind. Die auf das Rad wirkenden Kräfte werden somit über die Radachse auf die Hohlwelle übertragen, die ihrerseits reibungsfrei mittels Hydrostatik im Gehäuse schwimmt.

Aus der DE 10 2015 224 636 A1 ist ein Radkraftdynamometer zur Messung von Reifenkräften bekannt. Kräfte und Momente, die auf einen Fahrzeugreifen wirken, werden mittels Kraftsensoren gemessen, wobei das Fahrzeugrad drehbar mittels einer Radachse gelagert ist. Die Radachse ist als Hohlwelle ausgebildet, welche auf einem biegesteifen, ortsfest angeordneten Lagerzapfen gelagert ist. Dadurch bietet die Radachse ein maximales Widerstandsmoment und eine hohe Biegesteifigkeit.

Die WO 2014/092722 A1 offenbart ein Verfahren zum Bestimmen eines oder mehrerer Hochgeschwindigkeitsgleichförmigkeitsparameter eines Reifens. Dazu wird der Reifen gemäß einem bestimmten Geschwindigkeitsrampenprofil rotiert, wobei das Geschwindigkeitsrampenprofil das Erhöhen der Drehgeschwindigkeit eines Reifens von null auf eine erste Drehgeschwindigkeit in einer ersten Richtung umfasst und anschließend das Verringern der Drehgeschwindigkeit zurück auf null umfasst. Während des Drehens werden kontinuierlich Gleichförmigkeitsdaten für den Reifen gemessen. Anschließend werden die gemessenen Gleichförmigkeitsdaten analysiert, um einen oder mehrere Hochgeschwindigkeitsgleichförmigkeitsparameter für den Reifen zu bestimmen.

Die DE 10 2017 109 650 A1 beschreibt ein Verfahren zur indirekten Reifendrucküberwachung eines Fahrzeugreifens. Dabei wird mindestens eine Kraft in bestimmbaren Zeitintervallen und entlang einer Raumrichtung von mindestens einer Sensoreinrichtung zur Kraftdetektion erfasst, wobei die mindestens eine Kraft auf ein Radlager oder einen Radträger eines Kraftfahrzeugs und somit auf einen Reifen einwirkt. Aus der erfassten Kraft wird dann der Reifendruck bestimmt.

Aus der US 5 606 122 sind Aufnehmerspulen bekannt, die Fahrzeugradgeschwindigkeitssignale erzeugen, welche Vibrationsfrequenzkomponenten von Reifen während des Fahrens eines Fahrzeugs enthalten. Eine elektronische Steuereinheit extrahiert Resonanzfrequenzen der Reifen aus den Fahrzeugradgeschwindigkeitssignalen und schätzt den Reifenluftdruck basierend auf den extrahierten Resonanzfrequenzen.

Die bekannten Verfahren zur Bestimmung von Reifeneigenschaften im Rahmen einer Produktionskontrolle mittels der bekannten Vorrichtungen sind jedoch dahingehend nachteilbehaftet, als dass sie Druckschwingungen des Fluids, üblicherweise Luft, im Fahrzeugreifen nicht gebührend berücksichtigen.

Es ist eine Aufgabe der Erfindung, ein verbessertes Verfahren zur Vorhersage von Druckschwingungen in einem Fahrzeugreifen vorzuschlagen.

Diese Aufgabe wird erfindungsgemäß durch das Verfahren zur Vorhersage von Druckschwingungen in einem Fahrzeugreifen gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zur Vorhersage von Druckschwingungen in einem Fahrzeugreifen, wobei der Fahrzeugreifen auf einer Prüfstandsfelge über eine Radlagerung drehbar gelagert wird, wobei der Fahrzeugreifen in seinem Inneren mittels eines Fluids druckbeaufschlagt wird, wobei der Fahrzeugreifen mit einer Radlast beaufschlagt wird, wobei der Fahrzeugreifen gemäß einer vorgebbaren Geschwindigkeitsrampe auf eine Endgeschwindigkeit beschleunigt wird, wobei das Fluid nach Maßgabe einer Reifengeschwindigkeit eine Schwingungsanregung erfährt und wobei das Fluid auf die Schwingungsanregung mit einer Druckschwingung reagiert. Das erfindungsgemäße Verfahren zeichnet sich dadurch aus, dass eine vom Fahrzeugreifen aufgrund der Druckschwingung auf die Radlagerung wirkende Kraft kontinuierlich erfasst wird und dass ein die Kraft über der Reifengeschwindigkeit und über einer Frequenz beschreibender Datensatz erzeugt wird, indem ein Zeitsignal der Geschwindigkeitsrampe einer Fourier-Transformation unterworfen wird, wobei es sich bei dem Zeitsignal um eine Änderung der erfassten Reifenkraft mit der Zeit während eines Durchfahrens der Geschwindigkeitsrampe handelt, und dass in analoger Weise ein Referenzdatensatz unter Verwendung einer Fahrzeugfelge anstelle der Prüfstandsfelge erzeugt wird.

Erfindungsgemäß ist es also vorgesehen, Druckschwingungen in einem Fahrzeugreifen vorherzusagen, indem der Fahrzeugreifen auf einer Prüfstandsfelge und über eine Radlagerung drehbar gelagert wird. Unter einer Prüfstandsfelge wird dabei im Sinne der Erfindung eine typischerweise im Zusammenhang mit Reifenprüfungen an industriellen Prüfständen verwendete Felge verstanden. Eine derartige Prüfstandsfelge besteht üblicherweise aus zwei Axialhälften, welche von beiden Axialseiten des Fahrzeugreifens kommend in eine zentrale Reifenöffnung eintauchen und ein als Druckraum wirkendes Inneres des Fahrzeugreifens entsprechend einer herkömmlichen Fahrzeugfelge druckdicht verschließen. Das Verwenden einer Prüfstandsfelge führt dabei in der Regel zu einem anderen Abrollverhalten des Fahrzeugreifens, insbesondere zu einem anderen Verhalten der Druckschwingungen im Fahrzeugreifen, als es eine herkömmliche Fahrzeugfelge tun würde. Der Fahrzeugreifen wird weiterhin in seinem Inneren druckbeaufschlagt, was bevorzugt mittels Luft als Fluid erfolgt, wobei die Luft vorteilhaft durch eine Fluidzuführöffnung der Prüfstandsfelge in das Innere des Fahrzeugreifens gefördert wird, bis ein vorgebbarer Druck erreicht wird.

Dieser Druck entspricht bevorzugt einem üblichen Betriebsdruck des Fahrzeugreifens bei Verwendung an einem Kraftfahrzeug. Wenn der vorgebbare Druck erreicht wurde, wird der Fahrzeugreifen auf eine Endgeschwindigkeit beschleunigt. Die Beschleunigung folgt dabei einer vorgebbaren Geschwindigkeitsrampe, wobei die Geschwindigkeitsrampe bevorzugt bei der Reifengeschwindigkeit Null, also mit dem Stillstand des Fahrzeugreifens, startet und mit der Endgeschwindigkeit endet. Alternativ bevorzugt kann die Geschwindigkeitsrampe aber auch bei einer Geschwindigkeit größer als Null starten. Beispielsweise kann ein Geschwindigkeitsbereich unterhalb der Geschwindigkeitsrampe möglichst schnell durchfahren werden, bevor dann die eigentliche Geschwindigkeitsrampe unter definierten Prüfbedingungen, wie insbesondere einem definierten Innendruck und einer definierten Radlast, durchfahren wird. Die Endgeschwindigkeit ist dabei ebenso vorgebbar wie die Zunahme der Reifengeschwindigkeit, also die Beschleunigung, wobei die Geschwindigkeitsrampe vorteilhafterweise stetig sein soll, d.h., dass die Beschleunigung während des Durchfahrens der Geschwindigkeitsrampe niemals negativ wird. Alternativ bevorzugt kann die die Geschwindigkeitsrampe aber auch rückwärts durchfahren werden, also insbesondere ausschließlich negative Beschleunigungen aufweisen und keine positiven Beschleunigungen aufweisen. Ebenso ist es auch denkbar und bevorzugt, einzelne oder mehrere Geschwindigkeitsbereiche der Geschwindigkeitsrampe vorwärts, also mit positiver Beschleunigung, und rückwärts, also mit negativer Beschleunigung, mehrfach zu durchfahren. Eine bevorzugt Beschleunigung der Geschwindigkeitsrampe kann z.B. 1 km/hs betragen. Diese Beschleunigung stellt einen in vielen Fällen guten Kompromiss zwischen einem zügigen Durchfahren der Geschwindigkeitsrampe auf der einen Seite und einer ausreichend hohen Messgenauigkeit auf der anderen Seite dar. Da der Fahrzeugreifen über die Radlagerung gelagert ist und die Radlagerung bevorzugt Bestandteil des Prüfstands ist, ist der Fahrzeugreifen während der Ausführung des erfindungsgemäßen Verfahrens ortsfest im Prüfstand angeordnet. Entsprechend wird unter dem Begriff "Reifengeschwindigkeit" im Sinne der Erfindung eine Abrollgeschwindigkeit des Fahrzeugreifens verstanden, beispielsweise auf einer Lauftrommel oder einem Laufband. Im technischen Sinne wird der Fahrzeugreifen also auf eine bestimmte Winkelgeschwindigkeit beschleunigt und die Reifengeschwindigkeit im Sinne der Erfindung ergibt sich dann aus der Winkelgeschwindigkeit und dem Radius des Fahrzeugreifens durch Multiplikation. Bei einer Reifengeschwindigkeit von mehr als Null rotiert der Fahrzeugreifen über die Radlagerung, wodurch der Fahrzeugreifen zu geschwindigkeitsabhängigen Reifenschwingungen mit einer Reifenfrequenz angeregt wird. Diese Reifenschwingungen übertragen sich auch auf das Fluid, also bevorzugt die Luft, im Inneren des Fahrzeugreifens und regen dort ebenfalls eine geschwindigkeitsabhängige Druckschwingung mit einer Druckfrequenz an. Abhängig von den Eigenfrequenzen des Fluids sind Amplituden der Druckschwingungen mehr oder weniger stark ausgeprägt, wobei die Amplituden generell zunehmen, je näher die anregenden Schwingungen in die Nähe einer Eigenfrequenz des Fluids rücken. Die Eigenschwingungen des Fluids wiederum sind wesentlich geprägt durch den Druck, unter welchem das Fluid im Inneren des Fahrzeugreifens steht, sowie durch die Geometrie des Fahrzeugreifens, z.B. durch die Größe und Breite des Fahrzeugreifens. Die bei PKW auftretenden Frequenzen der Druckschwingung liegen typischerweise im Frequenzbereich zwischen 170 Hz und 250 Hz. Die Druckschwingung des Fluids, ebenso wie die Reifenschwingungen des Fahrzeugreifens, wirken dabei als erfassbare Kraft auf die Radlagerung, wo sie z.B. mittels entsprechend ausgebildeter und angeordneter Kraftsensoren erfasst werden können.

Da die Druckschwingungen im Inneren des Fahrzeugreifens im realen Betrieb des Fahrzeugreifens an einem Kraftfahrzeug auch eine Schwingung der Fahrzeugfelge hervorrufen, welche sich wiederum über die Radaufhängung auf das Kraftfahrzeug übertragen kann, ist es wichtig, das Schwingungsverhalten des Fluids im Inneren des Fahrzeugreifens zu kennen. Die Kraftsensoren erfassen dabei sowohl eine statische Kraft, die z.B. als Radlast definiert auf den Fahrzeugreifen ausgeübt wird, als auch eine dynamische Kraft, die durch das Abrollverhalten des Fahrzeugreifens bei unterschiedlichen Geschwindigkeiten entsteht. Je größer eine auf die Radlagerung wirkende, erfasste Kraft ist, desto höher ist naturgemäß die ihr zugrunde liegende Amplitude der Druckschwingung bzw. Reifenschwingung. Somit kann die erfasste Kraft vorteilhaft als Maß für die Amplitude der Druckschwingung bzw. Reifenschwingung herangezogen werden. Die Druckschwingungen bzw. Reifenschwingungen treten dabei nicht nur in erster Ordnung, sondern auch in höheren Ordnungen auf, so dass auch Amplituden von Druckschwingungen bzw. Reifenschwingung höherer Ordnungen sowie nicht-ganzzahlige Ordnungen erfasst werden können. Die Kraft wird dabei erfindungsgemäß kontinuierlich während des vollständigen Durchfahrens der Geschwindigkeitsrampe erfasst, also nicht nur bei bestimmten vorgegebenen Geschwindigkeitsstufen oder in bestimmten vorgegebenen Geschwindigkeitsfenstern. Ein Zeitsignal der bekannten Geschwindigkeitsrampe wird dann einer Fourier-Transformation unterworfen, um einen die Kraft über der Reifengeschwindigkeit und über der Frequenz beschreibenden Datensatz zu erzeugen. Der Begriff "Frequenz" umfasst im Sinne der Erfindung sowohl die Frequenz der Reifenschwingung des Fahrzeugreifens, also die Reifenfrequenz, also auch die Frequenz der Druckschwingung des Fluids, also die Druckfrequenz. Der Begriff "Frequenz" wird entsprechend als Oberbegriff für die Begriffe "Reifenfrequenz" und "Druckfrequenz" verwendet. Bei dem Zeitsignal handelt es sich bevorzugt um eine Änderung der erfassten Reifenkraft mit der Zeit während des Durchfahrens der Geschwindigkeitsrampe. Dadurch wird die statische Kraft, also insbesondere die Radlast, aus dem Datensatz eliminiert. Zusätzlich wird erfindungsgemäß ein Referenzdatensatz erzeugt, der sich vom erzeugten Datensatz nur dadurch unterscheidet, dass zu seiner Erzeugung Daten herangezogen werden, welche nicht mittels einer Prüfstandsfelge erfasst wurden, sondern mittels einer Fahrzeugfelge. Eine Fahrzeugfelge ist gegenüber einer Prüfstandsfelge im industriellen Prüfbetrieb dahingehend nachteilig, als dass ein Reifenwechsel vergleichsweise langwierig ist und somit den Prüfbetrieb verzögert. Jedoch bietet eine Fahrzeugfelge gegenüber einer Prüfstandsfelge den Vorteil, dass das Schwingungsverhalten des Fluids im Inneren des Fahrzeugreifens dem tatsächlichen Schwingungsverhalten im Fahrbetreib des Fahrzeugreifens an einem Kraftfahrzeug entspricht. Der Referenzdatensatz umfasst bevorzugt Frequenzen der Druckschwingungen und der Reifenschwingungen bis ca. 300 Hz. Es ist erfindungsgemäß unerheblich, ob der Datensatz oder der Referenzdatensatz zuerst erzeugt werden. Von Bedeutung ist lediglich, dass der Datensatz und der Referenzdatensatz sich durch die zu ihrer Erzeugung verwendete Felgenart unterscheiden, die zu ihrer Erzeugung verwendeten Daten sonst aber unter identischen Prüfbedingungen, also Druck, Radlast, Geschwindigkeitsrampe, erzeugt wurden.

Dass der Referenzdatensatz in analoger Weise wie der Datensatz unter Verwendung einer Fahrzeugfelde erzeugt wird, bedeutet im Sinne der Erfindung also, dass der Fahrzeugreifen auf einer Fahrzeugfelge über eine Radlagerung drehbar gelagert wird, wobei der Fahrzeugreifen in seinem Inneren mittels des Fluids druckbeaufschlagt wird, wobei der Fahrzeugreifen mit der Radlast beaufschlagt wird, wobei der Fahrzeugreifen gemäß der vorgebbaren Geschwindigkeitsrampe auf die Endgeschwindigkeit beschleunigt wird, wobei das Fluid nach Maßgabe der Reifengeschwindigkeit eine Schwingungsanregung erfährt, wobei das Fluid auf die Schwingungsanregung mit der Druckschwingung reagiert, wobei eine vom Fahrzeugreifen aufgrund der Druckschwingung auf die Radlagerung wirkende Kraft kontinuierlich erfasst wird und wobei ein die Kraft über der Reifengeschwindigkeit sowie über einer Frequenz beschreibender Referenzdatensatz erzeugt wird, indem ein Zeitsignal der Geschwindigkeitsrampe einer Fourier-Transformation unterworfen wird.

Wie sich gezeigt hat, beeinflussen die Druckschwingungen des Fluids maßgeblich den erzeugten Datensatz, insbesondere die im Datensatz enthaltene, auch von der Druckfrequenz abhängige Kraft bei unterschiedlichen Reifengeschwindigkeiten. Eine Analyse des Datensatzes erlaubt somit eine zuverlässige Aussage über die Druckschwingungen im Fahrzeugreifen.

Indem der Datensatz die Kraft über der Reifengeschwindigkeit und über der Frequenz, insbesondere für Schwingungen einer Vielzahl unterschiedlicher Ordnungen, umfasst, handelt es sich also um einen dreidimensionalen Datensatz, welcher die auf die Radlagerung wirkende Kraft in Abhängigkeit von der Reifengeschwindigkeit und von der Frequenz beschreibt.

Die Schwingungen können dabei entlang unterschiedlicher Schwingungsfreiheitsgrade im Fluid auftreten. Üblicherweise sind hier zwei unterschiedliche Schwingungsfreiheitsgrade zu beobachten.

Bevorzugt ist es vorgesehen, dass die Geschwindigkeitsrampe nicht nur stetig ansteigt, sondern bis zum Erreichen der Endgeschwindigkeit kontinuierlich ansteigt.

Gemäß einer bevorzugten Ausführungsform der Erfindung ist es vorgesehen, dass im Datensatz und im Referenzdatensatz Amplituden und Positionen von Resonanzen des Fluids jeweils mittels zweier sich im Stillstand des Fahrzeugreifens schneidender Geraden bestimmt werden. Es hat sich nämlich herausgestellt, dass die Amplituden und Positionen von Resonanzen innerhalb des Spektrums der erfassten Druckschwingungen auf vergleichsweise einfache Weise mittels zweier sich im Stillstand des Fahrzeugreifens schneidender Geraden bestimmt werden können. Eine vergleichsweise aufwändige und rechenintensive Analyse der Druckschwingungen zur Bestimmung der Amplituden und Positionen von Resonanzen des Fluids kann somit vorteilhaft entfallen. Aufgrund der Drehbewegung des Fahrzeugreifens kommt es nämlich zu einer geschwindigkeitsabhängigen und mit zunehmender Drehgeschwindigkeit zunehmenden Aufgabelung der Positionen von Amplituden, welche auf Resonanzen des Fluids zurückzuführen sind. Da die Weite der Aufgabelung von der Reifengeschwindigkeit bzw. Drehgeschwindigkeit abhängt, ist sie im Stillstand des Fahrzeugreifens noch Null. Wie sich gezeigt hat, kann eine derartige Aufgabelung mittels zweier Geraden gut nachvollzogen werden.

Bevorzugt werden ebenfalls die Amplituden und Positionen derjenigen Resonanzen bestimmt, die auf Reifenstrukturschwingungen zurückzuführen sind. Resonanzen der Reifenstrukturschwingungen werden dabei beispielsweise daran erkannt, dass sie abseits der zwei sich im Stillstand des Fahrzeugreifens schneidender Geraden liegen. Zudem liegen sie typischerweise bei vergleichsweise niedrigeren Frequenzen als die Resonanzen der Druckschwingungen.

Gemäß einer besonders bevorzugten Ausführungsform der Erfindung ist es vorgesehen, dass die Geraden ausgehend vom Stillstand des Fahrzeugreifens durch sich V-förmig aufgabelnde Maxima von Kräften unterschiedlicher Schwingungsordnungen gelegt werden. Die Maxima entsprechen dabei auftretenden Resonanzen des Fluids. Die Kräfte sind ein Maß für die Amplituden der erfassten Schwingungen. Wie bereits beschrieben wurde, führt die Drehbewegung des Fahrzeugreifens zu einer geschwindigkeitsabhängigen Aufgabelung der Positionen von Amplituden, welche auf Resonanzen des Fluids zurückzuführen sind. Mit zunehmender Reifengeschwindigkeit nimmt die Aufgabelung also immer weiter zu, ausgehend vom Stillstand des Reifens, bei dem es noch keine Aufgabelung gibt, da die Drehgeschwindigkeit hier Null ist. Die Maxima der Kräfte bzw. der Amplituden, soweit sie auf Druckschwingungen und nicht auf Reifenschwingungen zurückzuführen sind, laufen also mit zunehmender Reifengeschwindigkeit immer weiter auseinander, sie gabeln also V-förmig auf. Indem die zwei Geraden nun, ausgehend vom Stillstand des Fahrzeugreifens, durch die sich V-förmig aufgabelnden Maxima gelegt werden, können die Resonanzen der Druckschwingungen aller erfassten Ordnungen sehr einfach bestimmt werden, da jeder Schnittpunkt der Geraden mit einem Maximum entsprechend eine Resonanz des Fluids darstellt.

Gemäß einer ganz besonders bevorzugten Ausführungsform der Erfindung ist es vorgesehen, dass ausschließlich Maxima von Schwingungsordnungen größer als eine zehnte Ordnung herangezogen werden. Ausführliche Messungen und Beobachtungen haben gezeigt, dass Resonanzen, welche auf Druckschwingungen des Fluids im Inneren des Fahrzeugreifens zurückzuführen sind, zumindest für PKW-Reifen üblicherweise nicht bei Schwingungsordnungen zu beobachten sind, die kleiner oder gleich der zehnten Ordnung sind. Somit kann der Bereich des Datensatzes, innerhalb dem nach Resonanzen des Fluids gesucht wird, von vornherein eingeschränkt werden, was die Bestimmung dieser Resonanzen nochmals vereinfacht.

Gemäß einer weiteren ganz besonders bevorzugten Ausführungsform der Erfindung ist es vorgesehen, dass ausschließlich Maxima in einem Frequenzbereich von 140 Hz bis 300 Hz herangezogen werden. Ebenso wie sich gezeigt hat, dass auf Druckschwingungen des Fluids im Fahrzeugreifen zurückgehende Maxima üblicherweise nicht bei Schwingungsordnungen zu beobachten sind, die kleiner oder gleich der zehnten Ordnung sind, hat sich herausgestellt, dass diese Maxima zumindest für PKW-Reifen üblicherweise im Frequenzbereich von 140 Hz bis 300 Hz liegen. Somit kann der Bereich des Datensatzes, innerhalb dem nach Resonanzen des Fluids gesucht wird, auch hinsichtlich des Frequenzbereichs eingeschränkt werden. Dies ermöglicht eine noch weitere Vereinfachung der Bestimmung der Resonanzen.

Gemäß einer weiteren bevorzugten Ausführungsform der Erfindung ist es vorgesehen, dass aus Amplituden von Resonanzen des Fluids und Amplituden von Resonanzen der Struktur des Fahrzeugreifens gleicher Ordnung im Referenzdatensatz ein erstes Relativverhältnis gebildet wird und/oder dass aus Positionen von Resonanzen des Fluids und Positionen von Resonanzen des Fahrzeugreifens gleicher Ordnung im Referenzdatensatz ein zweites Relativverhältnis gebildet wird. Unter der "Position" einer Resonanz wird dabei diejenige Frequenz verstanden, bei der die jeweilige Resonanz auftritt. Indem nun die solcherart bestimmten Amplituden der Resonanzen des Fluids mit den Amplituden der Resonanzen der Struktur des Fahrzeugreifens miteinander in ein erstes Relativverhältnis gesetzt werden und die Positionen von Resonanzen des Fluids und Positionen von Resonanzen des Fahrzeugreifens miteinander in ein zweites Relativverhältnis gesetzt werden, kann über das erste bzw. zweite Relativverhältnis ein mathematischer Zusammenhang zwischen den Amplituden bzw. Positionen der Resonanzen des Fluids mit den Amplituden bzw. Positionen der Resonanzen des Fahrzeugreifens hergestellt werden.

Gemäß einer besonders bevorzugten Ausführungsform der Erfindung ist es vorgesehen, dass aus den im Datensatz enthaltenen Amplituden von Resonanzen der Struktur des Fahrzeugreifens und dem ersten Relativverhältnis die Amplituden von Resonanzen des Fluids bestimmt werden und/oder dass aus den im Datensatz enthaltenen Positionen von Resonanzen des Fahrzeugreifens und dem zweiten Relativverhältnis die Positionen von Resonanzen des Fluids bestimmt werden. Hierbei wird die überraschende Erkenntnis genutzt, dass die Amplituden und Positionen der Resonanzen der Struktur des Fahrzeugreifens unabhängig davon, ob der Fahrzeugreifen auf einer Fahrzeugfelge oder einer Prüfstandfelge montiert ist, im Wesentlichen unverändert bleiben. Lediglich die Amplituden und Positionen der Resonanzen des Fluids ändern sich je nach verwendeter Felgenart. Durch Heranziehen des ersten bzw. zweiten Relativverhältnisses kann somit zum Erzeugen des Datensatzes vorteilhaft auf die Prüfstandsfelge zurückgegriffen werden, was wegen der vergleichsweise kurzen Montagezeiten von wenigen Sekunden insbesondere im industriellen Prüfbetrieb einen wesentlichen Vorteil bringt, und dennoch können die Amplituden und Positionen der Resonanzen des Fluids zuverlässig im tatsächlichen Fahrbetrieb rechnerisch bestimmt werden. Beispielsweise kann aus der Position einer Resonanz 12. Ordnung des Fahrzeugreifens und dem zweiten Relativverhältnis die Position einer Resonanz 12. Ordnung des Fluids bestimmt werden.

Gemäß einer weiteren bevorzugten Ausführungsform der Erfindung ist es vorgesehen, dass eine Klassifizierung des Fahrzeugreifens erfolgt, indem die Amplituden der Resonanzen des Fluids mit Referenzamplituden in einem vorgebbaren und über ein Frequenzspektrum sowie ein Reifengeschwindigkeitsspektrum aufgespannten Fenster verglichen werden. Das Fenster gibt dabei über das Frequenzspektrum und das Reifengeschwindigkeitsspektrum jeweils einen anpassbaren Rahmen vor, innerhalb dessen die Amplituden der Resonanzen des Fluids einen bestimmten vorgebbaren Wert der Referenzamplituden nicht überschreiten dürfen, damit der Fahrzeugreifen mit der entsprechenden Klassifizierung versehen werden kann. Sofern die Amplituden der Resonanzen des Fluids also die vorgebbaren Referenzamplituden in dem über das Frequenzspektrum und das Reifengeschwindigkeitsspektrum aufgespannten Fenster nicht überschreiten, wird der Fahrzeugreifen entsprechend klassifiziert. Andernfalls wird der Fahrzeugreifen nicht klassifiziert. Es kann dabei schon ausreichend sein, dass nur eine einzelne Amplitude der Resonanzen des Fluids eine ihr zugeordnete Referenzamplitude überschreitet, um den Fahrzeugreifen nicht zu klassifizieren. Das Fenster kann mindestens eine Referenzamplitude umfassen oder auch mehrere Referenzamplituden umfassen. Die Amplituden wie auch die Referenzamplituden werden dabei jeweils über die erfasste Kraft dargestellt.

Besonders bevorzugt ist es vorgesehen, dass eine Vielzahl von Amplituden der Resonanzen des Fluids mit einer Vielzahl von Referenzamplituden in einer Vielzahl von vorgebbaren und über das Frequenzspektrum sowie das Reifengeschwindigkeitsspektrum aufgespannten Fenstern verglichen wird. Somit kann der Fahrzeugreifen hinsichtlich einer Vielzahl unterschiedlicher Reifeneigenschaften klassifiziert werden.

Die Klassifizierung erfolgt dabei bevorzugt automatisiert in Form eines Softwarealgorithmus, der von einer hierfür ausgebildeten elektronischen Steuereinheit ausgeführt wird.

Gemäß einer besonders bevorzugten Ausführungsform der Erfindung ist es vorgesehen, dass das Fenster bzw. die Vielzahl von Fenstern nach einem vorgesehenen Verwendungszweck des Fahrzeugreifens vorgegeben werden. Daraus ergibt sich der Vorteil, dass der Fahrzeugreifen auf einfache Weise dahingehend klassifiziert werden kann, ob er für einen dem jeweiligen Fenster zugeordneten Verwendungszweck geeignet ist. Beispielsweise unterscheiden sich die Anforderungen an einen Fahrzeugreifen für einen Sportwagen von den Anforderungen an einen Fahrzeugreifen für einen SUV, LKW oder eine Landmaschine.

Gemäß einer bevorzugten Ausführungsform der Erfindung ist es vorgesehen, dass die Fourier-Transformation eine schnelle Fourier-Transformation ist. Die schnelle Fourier-Transformation ist dabei ein Algorithmus zur vergleichsweise effizienten und schnellen Berechnung der sog. diskreten Fourier-Transformation. Dadurch wird die erfindungsgemäße Erzeugung des Datensatzes vereinfacht und beschleunigt, gleichzeitig muss weniger Rechenleistung zur Durchführung der Fourier-Transformation vorgehalten werden.

Gemäß einer weiteren besonders bevorzugten Ausführungsform der Erfindung ist es vorgesehen, dass der Datensatz und der Referenzdatensatz für jedes Wertepaar von Reifengeschwindigkeit und Reifenfrequenz einen Reifenkraftwert umfassen. Somit wird die Kraft also nicht nur kontinuierlich erfasst, sondern es werden auch die solcherart kontinuierlich erfassten Kraftwerte zur Erzeugung des Datensatzes herangezogen, so dass der Datensatz ebenfalls die kontinuierlich erfassten Kraftwerte aufweist. Dadurch ist der Datensatz sehr viel umfassender als es vergleichbare Datensätze gemäß dem Stand der Technik sind. Die Betrachtung der Reifeneigenschaften bleibt damit nicht auf einzelne Messbereiche beschränkt. Es ist nämlich ebenfalls eine Erkenntnis der Erfindung, dass bestimmte Defekte bzw. unerwünschte Reifeneigenschaften, insbesondere auch Druckschwingungen im Fahrzeugreifen, nicht in allen Geschwindigkeitsbereichen bzw. Frequenzbereichen auftreten bzw. erkennbar sind. Indem der Referenzdatensatz auf ebenso kontinuierlich erfassten Kraftwerten beruht und diese auch aufweist, kann auch eine entsprechende rechnerische Bestimmung der Positionen von Resonanzen des Fluids anhand der Relativverhältnisse vollständig und umfassend erfolgen.

Die Erfindung betrifft weiterhin einen Prüfstand zur Vorhersage von Druckschwingungen in einem Fahrzeugreifen, umfassend eine Prüfstandsfelge, eine Fahrzeugfelde, eine Radlagerung, Mittel zur Druckbeaufschlagung des Fahrzeugreifens, Mittel zur Beaufschlagung des Fahrzeugreifens mit einer Radlast, Mittel zur Beschleunigung des Fahrzeugreifens, Mittel zur Erfassung einer Reifengeschwindigkeit und Mittel zur Erfassung einer Kraft und/oder einer Reifenschwingung und/oder einer Druckschwingung, wobei der Fahrzeugreifen mittels der Prüfstandsfelge oder mittels der Fahrzeugfelge auf der Radlagerung drehbar lagerbar ist, wobei der Fahrzeugreifen mittels der Mittel zur Druckbeaufschlagung in seinem Inneren mittels eines Fluids druckbeaufschlagbar ist, wobei der Fahrzeugreifen mittels der Mittel zur Beaufschlagung des Fahrzeugreifens mit einer Radlast mit einer Radlast beaufschlagbar ist, wobei der Fahrzeugreifen mittels der Mittel zur Beschleunigung des Fahrzeugreifens gemäß einer vorgebbaren Geschwindigkeitsrampe auf eine Endgeschwindigkeit beschleunigbar ist, so dass das Fluid nach Maßgabe der Reifengeschwindigkeit eine Schwingungsanregung erfährt und wobei das Fluid auf die Schwingungsanregung mit einer Druckschwingung reagiert und wobei die Reifengeschwindigkeit mittels der Mittel zur Erfassung der Reifengeschwindigkeit erfassbar ist. Der erfindungsgemäße Prüfstand zeichnet sich dadurch aus, dass eine vom Fahrzeugreifen aufgrund der Druckschwingung auf die Radlagerung wirkende Kraft mittels der Mittel zur Erfassung der Kraft und/oder der Reifenschwingung und/oder der Druckschwingung kontinuierlich erfassbar ist und dass der Prüfstand weiterhin elektronische Rechenmittel umfasst, wobei die elektronischen Rechenmittel dazu ausgebildet sind, einen die Kraft über der Reifengeschwindigkeit und über einer Frequenz beschreibenden Datensatz oder Referenzdatensatz zu erzeugen, indem sie ein Zeitsignal der Geschwindigkeitsrampe einer Fourier-Transformation unterwerfen, wobei es sich bei dem Zeitsignal um eine Änderung der erfassten Reifenkraft mit der Zeit während eines Durchfahrens der Geschwindigkeitsrampe handelt.

Die Radlagerung ist bevorzugt als reibungsarme Radlagerung ausgebildet, beispielsweise als hydrostatische Gleitlagerung, welche eine Rotation des Fahrzeugreifens ermöglicht.

Die Mittel zur Beschleunigung sind bevorzugt als ein oder mehrere Elektromotoren ausgebildet, welche insbesondere über ein schaltbares Getriebe bzw. ein oder mehrere feste Getriebestufen eine Drehbeschleunigung des Fahrzeugreifens bewirken können.

Die Mittel zur Druckbeaufschlagung des Fahrzeugreifens sind bevorzugt als Fluidpumpe, insbesondere als Luftpumpe, ausgebildet, beispielsweise als Membranpumpe oder Drehschieberpumpe.

Die Mittel zur Beaufschlagung des Fahrzeugreifens mit einer Radlast sind bevorzugt als steuerbarer oder regelbarer Fluidzylinder ausgebildet, der den Fahrzeugreifen während des Durchfahrens der Geschwindigkeitsrampe mit einer vorgebbaren Radlast beaufschlagt. Die Beaufschlagung mit der Radlast durch den Fluidzylinder kann während des Durchfahrens der Geschwindigkeitsrampe beispielsweise konstant sein oder kontrolliert geändert werden.

Die Mittel zur Erfassung der Reifengeschwindigkeit sind bevorzugt dazu ausgebildet, einen Drehwinkel pro Zeiteinheit optisch, magnetisch oder elektromagnetisch zu erfassen.

Die Mittel zur Erfassung der Kraft und/oder einer Reifenschwingung und/oder einer Druckschwingung sind bevorzugt als Kraftsensoren ausgebildet, welche auch eine vergleichsweise schnelle Änderung der auf sie einwirkenden Kraft oder Kräfte erfassen können, insbesondere bis zu 300 Hz. Besonders geeignet als Mittel zur Erfassung der Kraft bzw. einer Reifenschwingung bzw. einer Druckschwingung sind vorteilhaft sog. Piezo-Kraftsensoren.

Gemäß einer bevorzugten Ausführungsform der Erfindung ist es vorgesehen, dass der Prüfstand dazu ausgebildet ist, das erfindungsgemäße Verfahren auszuführen.

Nachfolgend wird die Erfindung anhand von in den Figuren dargestellten Ausführungsformen beispielhaft erläutert.

Es zeigen:
- Fig. 1: schematisch eine Übersicht über die zwei üblicherweise zu beobachtenden Schwingungsfreiheitsgrade eines Fluids im Inneren eines Fahrzeugreifens,
- Fig. 2: beispielhaft und schematisch einen erfindungsgemäß erzeugten Datensatz und
- Fig. 3: beispielhaft und schematisch einen erfindungsgemäß erzeugten Referenzdatensatz.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

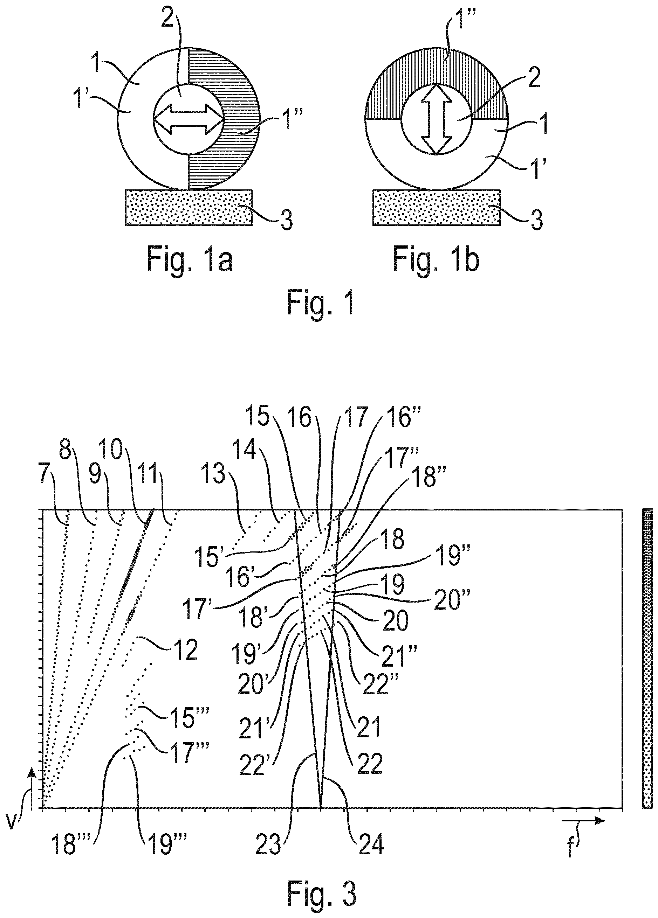

Fig. 1 zeigt schematisch eine Übersicht über die zwei üblicherweise zu beobachtenden Schwingungsfreiheitsgrade eines Fluids im Inneren eines Fahrzeugreifens 1 unter einer Druckbeaufschlagung. Dargestellt in Fig. 1 ist ein Fahrzeugreifen 1, der auf einer Felge montiert ist und sich über einen Untergrund 3 fortbewegt. Durch die Fortbewegung über den Untergrund 3 erfährt der Fahrzeugreifen 1 eine geschwindigkeitsabhängige Schwingungsanregung, welche sich auch auf das Fluid im Inneren des Fahrzeugreifens 1 überträgt. Beispielsgemäß handelt es sich bei dem Fluid um Luft. Die Schwingungen des Fluids treten als sich periodisch ändernde Dichteunterschiede des Fluids auf, also in Form von Druckschwingungen des Fluids. Fig. 1a zeigt dabei eine Druckschwingung entlang eines ersten Freiheitsgrads. Beispielsgemäß erfolgt die Druckschwingung (dargestellt durch einen Doppelpfeil) entlang der Fortbewegungsrichtung des Fahrzeugreifens 1. Der Druckunterschied aufgrund der Druckschwingung des Fluids im Fahrzeugreifen 1 ist durch eine Schraffur veranschaulicht: Im Bereich 1' des Fahrzeugreifens 1 ist ein Minimum der Druckschwingung dargestellt, wohingegen in schraffierten Bereich 1" ein Maximum dargestellt ist. Fig. 1b zeigt eine Druckschwingung des Fluids entlang eines zweiten Freiheitsgrads. Gemäß Fig. 1b schwingt das Fluid nämlich nicht entlang der Fortbewegungsrichtung des Fahrzeugreifens 1, sondern senkrecht dazu gegen den Untergrund 3 (ebenfalls dargestellt durch einen Doppelpfeil). Auch in Fig. 1 b ist der Druckunterschied aufgrund der Druckschwingung des Fluids im Fahrzeugreifen 1 durch eine Schraffur veranschaulicht.

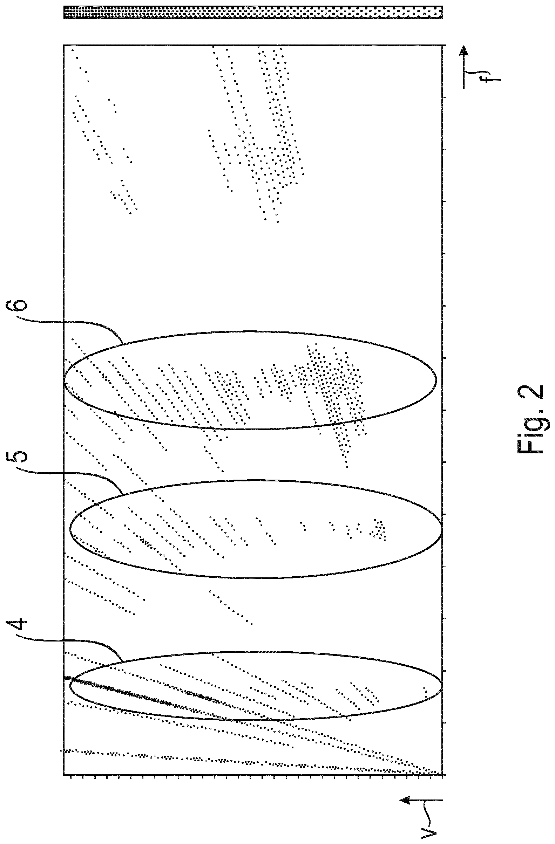

Fig. 2 zeigt beispielhaft und schematisch einen erfindungsgemäß erzeugten Datensatz, welcher die Kraft über der Reifengeschwindigkeit und über der Frequenz beschreibt. Der Datensatz wurde beispielsgemäß erzeugt, indem zunächst ein Fahrzeugreifen 1 auf einer Prüfstandsfelge 2 über eine Radlagerung drehbar gelagert wurde und in seinem Inneren mittels eines Fluids, beispielsgemäß Luft, druckbeaufschlagt wurde. Sodann wurde der Fahrzeugreifen 1 gemäß einer vorgebbaren Geschwindigkeitsrampe aus dem Sillstand auf eine Endgeschwindigkeit beschleunigt. Während des Durchfahrens der Geschwindigkeitsrampe wurde der Fahrzeugreifen 1 weiterhin beispielgemäß mit einer konstanten Radlast beaufschlagt. Dadurch wurde der Fahrzeugreifen 1 nach Maßgabe einer Reifengeschwindigkeit zu einer Reifenschwingung mit einer Reifenfrequenz angeregt. Ebenso wurde auch das Fluid im Inneren des Fahrzeugreifens 1 nach Maßgabe der Reifengeschwindigkeit zu einer Druckschwingung mit einer Druckfrequenz angeregt. Die Reifenschwingung und die Druckschwingung führen beide jeweils zu einer auf die Radlagerung wirkenden Kraft, welche kontinuierlich während des gesamten Durchfahrens der Geschwindigkeitsrampe erfasst wurde. Schließlich wurde der in Fig. 2 dargestellte Datensatz erzeugt, indem ein Zeitsignal der Geschwindigkeitsrampe, beispielgemäß eine Änderung der erfassten Reifenkraft mit der Zeit während des Durchfahrens der Geschwindigkeitsrampe, einer schnellen Fourier-Transformation unterworfen wurde. Die Reifengeschwindigkeit ist in Fig. 2 dabei auf der y-Achse dargestellt und die Frequenz ist auf der x-Achse dargestellt. Die jeweilige Kraft ist anhand einer Färbung bzw. Schraffur erkennbar. Wie in Fig. 2 zu sehen ist, bilden sich in der Darstellung der Kraft über der Reifengeschwindigkeit und über der Frequenz hervorgehobene Linien aus, an welchen die erfasste Kraft größer ist als in den umliegenden Gebieten. Diese Linien 3 - 16 weisen Resonanzen unterschiedlicher Ordnungen auf. Wo eine Anregungsfrequenz auf eine Resonanz des Fahrzeugreifens 1 oder auf einer Resonanz eines zur Druckbeaufschlagung verwendeten Fluids im Fahrzeugreifen 1 trifft, ergibt sich eine deutliche Erhöhung der erfassten Kraft. In Fig. 2 ist eine Vielzahl von Resonanzen 4 zu sehen, welche sich dem Fahrzeugreifen 1 zuordnen lässt. Ebenso ist eine Vielzahl von Resonanzen 5 zu sehen, welche sich dem Fluid zuordnen lässt, wobei die dem Fluid zuordbaren Resonanzen 5 bei vergleichsweise höheren Frequenzen liegen als die dem Fahrzeugreifen 1 zuordbaren Resonanzen 4. Bei nochmals höheren Frequenzen ist zudem eine Vielzahl von Resonanzen 6 zu beobachten, welche jedoch dem für die Ausführung des erfindungsgemäßen Verfahrens herangezogenen Prüfstand zugeordnet werden können. Diese Resonanzen 6 spielen für die Bestimmung von Druckschwingungen des Fahrzeugreifens 1 keine Rolle und können dementsprechend für das erfindungsgemäße Verfahren unberücksichtigt bleiben.

Fig. 3 zeigt beispielhaft und schematisch einen erfindungsgemäß erzeugten Referenzdatensatz, der im Wesentlichen dem Datensatz der Fig. 2 entspricht, jedoch auf einen Frequenzbereich beschränkt ist, der keine dem Prüfstand zuordbaren Resonanzen 6 enthält. Zudem wurde für die Erzeugung des Referenzdatensatzes der Fig. 3 eine Fahrzeugfelge verwendet, was dazu führt, dass Resonanzen des Fluids bei denjenigen Positionen, d.h. bei denjenigen Reifengeschwindigkeiten und Frequenzen, beobachtet werden können, bei denen sie im Betrieb des Fahrzeugreifens 1 an einem Kraftfahrzeug tatsächlich auftreten würden. Auch im Datensatz der Fig. 3 ist die Ausbildung einer Vielzahl von Linien 7 - 22 zu sehen, wobei die Linien 7 - 22 geschwindigkeitsabhängig bzw. frequenzabhängig Maxima und Minima hinsichtlich der ihnen zugeordneten Kraft aufweisen (dargestellt durch eine Färbung bzw Schraffur). Weiterhin zu sehen sind zwei Geraden 23 und 24, die sich im Stillstand des Fahrzeugreifens 1 schneiden, also bei der Geschwindigkeit Null im Datensatz schneiden. Die Geraden 23 und 24 sind ausgehend vom Stillstand des Fahrzeugreifens 1 durch sich V-förmig auffächernde Maxima 15' - 22', 16" - 22" von Kräften unterschiedlicher Schwingungsordnungen gelegt. Die Schnittpunkte der Geraden 23 und 24 mit den Linien 15 - 22 bzw. mit deren Maxima 15' - 22', 16" - 22" stellen dabei die Resonanzen des Fluids im Inneren des Fahrzeugreifens 1 dar. Aus den mittels der zwei Geraden 23 und 24 identifizierten Resonanzen des Fluids und den im Referenzdatensatz ebenfalls enthaltenen Resonanzen 15‴, 17‴, 18‴ und 19‴ des Fahrzeugreifens 1 der Linien 15, 17, 18 und 19 wird nun beispielsgemäß ein erstes Relativverhältnis gebildet, welches die Amplitude jeder der Resonanzen 15‴, 17‴, 18‴ und 19‴ jeweils im Verhältnis zur Amplitude der Resonanzen 15', 17', 18' und 19' derselben Ordnung beschreibt, sowie ein zweites Relativverhältnis, welches die Position jeder der Resonanzen 15‴, 17‴, 18‴ und 19‴ jeweils im Verhältnis zur Position der Resonanzen 15', 17', 18' und 19' derselben Ordnung beschreibt. Mittels des auf diese Weise bestimmten ersten und zweiten Relativverhältnisses können bei weiteren Messungen von Fahrzeugreifen 1 am Prüfstand auf einer Prüfstandsfelge 2 auf einfache Weise die Amplituden und Positionen der Resonanzen des Fluids rechnerisch ermittelt werden, welche im tatsächlichen Betrieb des Fahrzeugreifens 1 an einem Kraftfahrzeug, also auf einer Fahrzeugfelge, auftreten würden.

### Bezugszeichen

- 1: Fahrzeugreifen
- 1': Minimum der Druckschwingung
- 1": Maximum der Druckschwingung
- 2: Prüfstandsfelge
- 3: Untergrund
- 4: Resonanzen des Fahrzeugreifens
- 5: Resonanzen des Fluids
- 6: Resonanzen des Prüfstands
- 7 - 22: Linien, Anregungsfrequenzen
- 15' - 22': Maxima, Resonanzen
- 16" - 22": Maxima, Resonanzen
- 15‴ - 19‴: Maxima, Resonanzen
- 23, 24: Gerade.

## Patentansprüche

1. Verfahren zur Vorhersage von Druckschwingungen in einem Fahrzeugreifen (1), wobei der Fahrzeugreifen (1) auf einer Prüfstandsfelge (2) über eine Radlagerung drehbar gelagert wird, wobei der Fahrzeugreifen (1) in seinem Inneren mittels eines Fluids druckbeaufschlagt wird, wobei der Fahrzeugreifen (1) mit einer Radlast beaufschlagt wird, wobei der Fahrzeugreifen (1) gemäß einer vorgebbaren Geschwindigkeitsrampe auf eine Endgeschwindigkeit beschleunigt wird, wobei das Fluid nach Maßgabe einer Reifengeschwindigkeit eine Schwingungsanregung erfährt und wobei das Fluid auf die Schwingungsanregung mit einer Druckschwingung reagiert,
wobei eine vom Fahrzeugreifen (1) aufgrund der Druckschwingung auf die Radlagerung wirkende Kraft kontinuierlich erfasst wird und dass ein die Kraft über der Reifengeschwindigkeit und über einer Frequenz beschreibender Datensatz erzeugt wird, indem ein Zeitsignal der Geschwindigkeitsrampe einer Fourier-Transformation unterworfen wird, wobei es sich bei dem Zeitsignal um eine Änderung der erfassten Reifenkraft mit der Zeit während eines Durchfahrens der Geschwindigkeitsrampe handelt und dass in analoger Weise ein Referenzdatensatz unter Verwendung einer Fahrzeugfelge anstelle der Prüfstandsfelge erzeugt wird.

2. Verfahren nach Anspruch 1,
**dadurch gekennzeichnet, dass** im Datensatz und im Referenzdatensatz Amplituden und Positionen von Resonanzen des Fluids (5) jeweils mittels zweier sich im Stillstand des Fahrzeugreifens schneidender Geraden (23, 24) bestimmt werden.

3. Verfahren nach Anspruch 2,
**dadurch gekennzeichnet, dass** die Geraden (23, 24) ausgehend von einem Stillstand des Fahrzeugreifens (1) durch sich V-förmig aufgabelnde Maxima Kräften (15' - 22`,16" - 22") von Kräften unterschiedlicher Schwingungsordnungen gelegt werden.

4. Verfahren nach mindestens einem der Ansprüche 1 bis 3,
**dadurch gekennzeichnet, dass** ausschließlich Maxima (15' - 22',16" - 22") von Schwingungsordnungen größer als eine zehnte Ordnung herangezogen werden.

5. Verfahren nach mindestens einem der Ansprüche 1 bis 4,
**dadurch gekennzeichnet, dass** ausschließlich Maxima (15' - 22',16" - 22") in einem Frequenzbereich von 140 Hz bis 300 Hz herangezogen werden.

6. nach mindestens einem der Ansprüche 1 bis 5,
**dadurch gekennzeichnet, dass** aus Amplituden von Resonanzen des Fluids (5, 15' - 22', 16" - 22") und Amplituden von Resonanzen der Struktur des Fahrzeugreifens (1, 4, 15‴ - 19‴) gleicher Ordnung ein erstes Relativverhältnis gebildet wird und/oder dass aus Positionen von Resonanzen des Fluids (5, 15' - 22', 16" - 22") und Positionen von Resonanzen des Fahrzeugreifens (1, 6, 15‴ - 19‴) gleicher Ordnung ein zweites Relativverhältnis gebildet wird.

7. Verfahren nach Anspruch 6,
**dadurch gekennzeichnet, dass** aus den im Datensatz enthaltenen Amplituden von Resonanzen der Struktur des Fahrzeugreifens (1, 6, 15‴ - 19‴) und dem ersten Relativverhältnis die Amplituden von Resonanzen des Fluids (5, 15' - 22', 16" - 22") bestimmt werden und/oder dass aus den im Datensatz enthaltenen Positionen von Resonanzen des Fahrzeugreifens (1, 6, 15‴ - 19‴) und dem zweiten Relativverhältnis die Positionen von Resonanzen des Fluids (5, 15' - 22', 16" - 22") bestimmt werden.

8. Verfahren nach mindestens einem der Ansprüche 2 bis 7,
**dadurch gekennzeichnet, dass** eine Klassifizierung des Fahrzeugreifens (1) erfolgt, indem die Amplituden der Resonanzen des Fluids (5, 15' - 22', 16" - 22") mit Referenzamplituden in einem vorgebbaren und über ein Frequenzspektrum sowie ein Reifengeschwindigkeitsspektrum aufgespannten Fenster verglichen werden.

9. Verfahren nach Anspruch 8,
**dadurch gekennzeichnet, dass** das Fenster nach einem vorgesehenen Verwendungszweck des Fahrzeugreifens (1) vorgegeben wird.

10. Verfahren nach mindestens einem der Ansprüche 1 bis 9,
**dadurch gekennzeichnet, dass** die Fourier-Transformation eine schnelle Fourier-Transformation ist.

11. Verfahren nach mindestens einem der Ansprüche 6 bis 10,
**dadurch gekennzeichnet, dass** der Datensatz und der Referenzdatensatz für jedes Wertepaar von Reifengeschwindigkeit und Reifenfrequenz einen Reifenkraftwert umfassen.

12. Prüfstand zur Vorhersage von Druckschwingungen in einem Fahrzeugreifen (1), umfassend eine Prüfstandsfelge (2), eine Fahrzeugfelde, eine Radlagerung, Mittel zur Druckbeaufschlagung des Fahrzeugreifens, Mittel zur Beaufschlagung des Fahrzeugreifens mit einer Radlast, Mittel zur Beschleunigung des Fahrzeugreifens (1), Mittel zur Erfassung einer Reifengeschwindigkeit und Mittel zur Erfassung einer Kraft und/oder einer Reifenschwingung und/oder einer Druckschwingung, wobei der Fahrzeugreifen (1) mittels der Prüfstandsfelge (2) oder mittels der Fahrzeugfelge auf der Radlagerung drehbar lagerbar ist, wobei der Fahrzeugreifen (1) mittels der Mittel zur Druckbeaufschlagung in seinem Inneren mittels eines Fluids druckbeaufschlagbar ist, wobei der Fahrzeugreifen (1) mittels der Mittel zur Beaufschlagung des Fahrzeugreifens (1) mit einer Radlast mit einer Radlast beaufschlagbar ist, wobei der Fahrzeugreifen (1) mittels der Mittel zur Beschleunigung des Fahrzeugreifens (1) gemäß einer vorgebbaren Geschwindigkeitsrampe auf eine Endgeschwindigkeit beschleunigbar ist, so dass das Fluid nach Maßgabe der Reifengeschwindigkeit eine Schwingungsanregung erfährt und wobei das Fluid auf die Schwingungsanregung mit einer Druckschwingung reagiert und wobei die Reifengeschwindigkeit mittels der Mittel zur Erfassung der Reifengeschwindigkeit erfassbar ist,
wobei eine vom Fahrzeugreifen (1) aufgrund der Druckschwingung auf die Radlagerung wirkende Kraft mittels der Mittel zur Erfassung der Kraft und/oder der Reifenschwingung und/oder der Druckschwingung kontinuierlich erfassbar ist und dass der Prüfstand weiterhin elektronische Rechenmittel umfasst, wobei die elektronischen Rechenmittel dazu ausgebildet sind, einen die Kraft über der Reifengeschwindigkeit und über einer Frequenz beschreibenden Datensatz oder Referenzdatensatz zu erzeugen, indem sie ein Zeitsignal der Geschwindigkeitsrampe einer Fourier-Transformation unterwerfen wobei es sich bei dem Zeitsignal um eine Änderung der erfassten Reifenkraft mit der Zeit während eines Durchfahrens der Geschwindigkeitsrampe handelt.

## Claims

1. Method for predicting pressure oscillations in a vehicle tyre (1), wherein the vehicle tyre (1) is rotatably mounted on a test bench rim (2) via a wheel bearing, wherein the interior of the vehicle tyre (1) is pressurized by means of a fluid, wherein a wheel load is applied to the vehicle tyre (1), wherein the vehicle tyre (1) is accelerated to a final speed according to a predefinable speed ramp, wherein the fluid experiences an oscillation excitation in accordance with a tyre speed, and wherein the fluid reacts to the oscillation excitation with a pressure oscillation, wherein a force acting on the wheel bearing from the vehicle tyre (1) on account of the pressure oscillation is continuously captured, and a data set describing the force against the tyre speed and against a frequency is generated by subjecting a time signal of the speed ramp to a Fourier transform, wherein the time signal is a change in the captured tyre force over time while running through the speed ramp, and a reference data set is generated in a similar manner using a vehicle rim instead of the test bench rim.

2. Method according to Claim 1,
**characterized in that** amplitudes and positions of resonances of the fluid (5) are each determined in the data set and in the reference data set by means of two straight lines (23, 24) which intersect when the vehicle tyre is at a standstill.

3. Method according to Claim 2,
**characterized in that** the straight lines (23, 24) are drawn, starting from a standstill of the vehicle tyre (1), through V-shaped forking maxima forces (15'-22', 16''-22'') of forces of different orders of oscillation.

4. Method according to at least one of Claims 1 to 3, **characterized in that** only maxima (15'-22', 16''-22'') of orders of oscillation of greater than a tenth order are used.

5. Method according to at least one of Claims 1 to 4, **characterized in that** only maxima (15'-22', 16''-22'') in a frequency range of 140 Hz to 300 Hz are used.

6. Method according to at least one of Claims 1 to 5, **characterized in that** a first relative relationship is formed from amplitudes of resonances of the fluid (5, 15'-22', 16"-22") and amplitudes of resonances of the structure of the vehicle tyre (1, 4, 15‴-19‴) of the same order, and/or **in that** a second relative relationship is formed from positions of resonances of the fluid (5, 15'-22', 16"-22") and positions of resonances of the vehicle tyre (1, 6, 15‴-19‴) of the same order.

7. Method according to Claim 6,
**characterized in that** the amplitudes of resonances of the fluid (5, 15'-22', 16"-22") are determined from the amplitudes of resonances of the structure of the vehicle tyre (1, 6, 15‴-19‴) that are included in the data set and the first relative relationship, and/or **in that** the positions of resonances of the fluid (5, 15'-22', 16"-22") are determined from the positions of resonances of the vehicle tyre (1, 6, 15‴-19‴) that are included in the data set and the second relative relationship.

8. Method according to at least one of Claims 2 to 7, **characterized in that** the vehicle tyre (1) is classified by comparing the amplitudes of the resonances of the fluid (5, 15'-22', 16"-22") with reference amplitudes in a predefinable window spanned across a frequency spectrum and a tyre speed spectrum.

9. Method according to Claim 8,
**characterized in that** the window is predefined according to an envisaged intended purpose of the vehicle tyre (1).

10. Method according to at least one of Claims 1 to 9, **characterized in that** the Fourier transform is a fast Fourier transform.

11. Method according to at least one of Claims 6 to 10, **characterized in that** the data set and the reference data set comprise a tyre force value for each value pair of the tyre speed and tyre frequency.

12. Test bench for predicting pressure oscillations in a vehicle tyre (1), comprising a test bench rim (2), a vehicle rim, a wheel bearing, means for pressurizing the vehicle tyre, means for applying a wheel load to the vehicle tyre, means for accelerating the vehicle tyre (1), means for capturing a tyre speed and means for capturing a force and/or a tyre oscillation and/or a pressure oscillation, wherein the vehicle tyre (1) can be rotatably mounted on the wheel bearing by means of the test bench rim (2) or by means of the vehicle rim, wherein the interior of the vehicle tyre (1) can be pressurized by means of a fluid using the pressurizing means, wherein a wheel load can be applied to the vehicle tyre (1) using the means for applying a wheel load to the vehicle tyre (1), wherein the vehicle tyre (1) can be accelerated to a final speed according to a predefinable speed ramp using the means for accelerating the vehicle tyre (1), with the result that the fluid experiences an oscillation excitation in accordance with the tyre speed, and wherein the fluid reacts to the oscillation excitation with a pressure oscillation, and wherein the tyre speed can be captured using the means for capturing the tyre speed, wherein a force acting on the wheel bearing from the vehicle tyre (1) on account of the pressure oscillation can be continuously captured using the means for capturing the force and/or the tyre oscillation and/or the pressure oscillation, and the test bench also comprises electronic computing means, wherein the electronic computing means are designed to generate a data set or reference data set describing the force against the tyre speed or against a frequency by subjecting a time signal of the speed ramp to a Fourier transform, wherein the time signal is a change in the captured tyre force over time while running through the speed ramp.

## Revendications

1. Procédé de prévision d'oscillations de pression dans un pneumatique de véhicule (1), le pneumatique de véhicule (1) étant monté de manière rotative sur une jante de banc d'essai (2) par le biais d'un montage de roue sur palier, le pneumatique de véhicule étant soumis à une pression à l'intérieur au moyen d'un fluide, le pneumatique de véhicule (1) étant soumis à une charge de roue, le pneumatique de véhicule (1) étant accéléré jusqu'à une vitesse finale suivant une rampe de vitesse spécifiée, le fluide subissant une excitation vibratoire en fonction d'une vitesse de pneumatique et le fluide réagissant à l'excitation vibratoire par une vibration de pression, une force qui agit sur le montage de roue sur palier en raison de l'oscillation de pression qui provient du pneumatique de véhicule (1) étant détectée en continu et un ensemble de données qui décrit la force exercée sur le biais de la vitesse de pneumatique et une fréquence étant générée par soumission d'un signal temporel de la rampe de vitesse à une transformation de Fourier, le signal temporel étant une variation dans le temps de la force de pneumatique détectée lors de l'excursion de la rampe de vitesse et un ensemble de données de référence étant généré de manière analogue à l'aide d'une jante de véhicule à la place de la jante de banc d'essai.

2. Procédé selon la revendication 1, **caractérisé en ce que**, dans l'ensemble de données et dans l'ensemble de données de référence, des amplitudes et des positions de résonances du fluide (5) sont déterminées chacune au moyen de deux droites (23, 24) qui se coupent lorsque le pneumatique de véhicule est à l'arrêt.

3. Procédé selon la revendication 2, **caractérisé en ce que** les droites (23, 24), sont appliquées par des forces de différents ordres de vibration par le biais de forces maximales (15', 22', 16'' - 22'') bifurquant en forme de V à partir de l'arrêt du pneumatique de véhicule (1).

4. Procédé selon l'une au moins des revendications 1 à 3, **caractérisé en ce que** seuls les maxima (15' - 22', 16'' - 22'') d'ordres de vibration supérieurs à un ordre dix sont utilisés.

5. Procédé selon l'une au moins des revendications 1 à 4, **caractérisé en ce que** seuls les maxima (15' - 22', 16'' - 22'') sont utilisés dans une gamme de fréquences de 140 Hz à 300 Hz.

6. Procédé selon l'une au moins des revendications 1 à 5, **caractérisé en ce qu'**un premier relatif est formé à partir d'amplitudes de résonances du fluide (5, 15' 22', 16'' - 22'') et d'amplitudes de résonances de la structure du pneumatique de véhicule (1, 4, 15‴ - 19‴) du même ordre et/ou **en ce qu'**un deuxième rapport relatif est formé à partir de positions de résonances du fluide (5, 15' - 22', 16" - 22'') et de positions de résonances du pneumatique de véhicule (1, 6, 15''' - 19‴) du même ordre.

7. Procédé selon la revendication 6, **caractérisé en ce que** les amplitudes de résonances du fluide (5, 15' - 22', 16'' - 22'') sont déterminées à partir des amplitudes de la structure du pneumatique de véhicule (1, 6, 15‴ - 19‴) qui sont contenues dans l'ensemble de données et/ou **en ce que** les positions de résonances du fluide (5, 15' - 22', 16" - 22'') sont déterminées à partir des positions de résonances du fluide (1, 6, 15‴ - 19‴) qui sont contenues dans l'ensemble de données et du deuxième rapport relatif.

8. Procédé selon l'une au moins des revendications 2 à 7, **caractérisé en ce qu'**une classification du pneumatique de véhicule (1) est effectuée par comparaison des amplitudes des résonances du fluide (5, 15' - 22', 16" - 22") à des amplitudes de référence dans une fenêtre spécifiable qui couvre un spectre de fréquences et un spectre de vitesses de pneumatique.

9. Procédé selon la revendication 8, **caractérisé en ce que** la fenêtre est spécifiée en fonction d'une utilisation prévue du pneumatique de véhicule (1).

10. Procédé selon l'une au moins des revendications 1 à 9, **caractérisé en ce que** la transformation de Fourier est une transformation de Fourier rapide.

11. Procédé selon l'une au moins des revendications 6 à 10, **caractérisé en ce que** l'ensemble de données et l'ensemble de données de référence comprennent une valeur de force de pneumatique pour chaque couple de valeurs de vitesse de pneumatique et de fréquence de pneumatique.

12. Banc d'essai destiné à la prévision de vibrations de pression dans un pneumatique de véhicule (1), ledit banc d'essai comprenant une jante de banc d'essai (2), une jante de véhicule, un montage de roue sur palier, des moyens de soumission du pneumatique de véhicule à une pression, des moyens de soumission d'une charge de roue au pneumatique de véhicule, des moyens d'accélération du pneumatique de véhicule (1), des moyens de détection d'une vitesse de pneumatique et des moyens de détection d'une force et/ou d'une vibration de pneumatique et/ou d'une vibration de pression, le pneumatique de véhicule (1) étant monté de manière rotative sur le montage de roue sur palier au moyen de la jante de banc d'essai (2) ou au moyen de la jante de véhicule, le pneumatique de véhicule (1) pouvant être soumis à l'intérieur à une pression au moyen d'un fluide, le pneumatique de véhicule (1) pouvant être soumis à une charge de roue par les moyens de soumission du pneumatique de véhicule (1) à une charge de roue, le pneumatique de véhicule (1) pouvant être accéléré jusqu'à une vitesse finale par les moyens d'accélération du pneumatique de véhicule (1) suivant une rampe de vitesse spécifiable de sorte que le fluide subisse une excitation vibratoire en fonction de la vitesse de pneumatique et le fluide réagissant à l'excitation vibratoire par une oscillation de pression et la vitesse de pneumatique pouvant être détectée par les moyens de détection de vitesse de pneumatique, une force qui agit sur le montage de roue sur palier en raison de l'oscillation de pression qui provient du pneumatique de véhicule (1) pouvant être détectée en continu par les moyens de détection de la force et/ou de l'oscillation de pneumatique et/ou de l'oscillation de pression et le banc d'essai comprenant en outre des moyens de calcul électroniques, les moyens de calcul électroniques étant conçus pour générer un ensemble de données ou un ensemble de données de référence décrivant la force exercée sur la vitesse de pneumatique et une fréquence par soumission d'un signal temporel de la rampe de vitesse à une transformation de Fourier, le signal temporel étant une variation dans le temps de la force de pneumatique détectée lors de l'excursion de la rampe de vitesse.
